Europäisches Patentamt
European Patent Office
Office européen des brevets

(19)

(11) Veröffentlichungsnummer: **0 682 087 A1**

(12) **EUROPÄISCHE PATENTANMELDUNG**

(21) Anmeldenummer: **95106004.5**

(22) Anmeldetag: **21.04.95**

(51) Int. Cl.[6]: **C09B 17/00**, C09B 57/10, C07D 487/14, C09D 7/12, C08K 5/3462, //(C07D487/14, 241:00,239:00,239:00)

(30) Priorität: **04.05.94 DE 4415656**

(43) Veröffentlichungstag der Anmeldung: **15.11.95 Patentblatt 95/46**

(84) Benannte Vertragsstaaten: **CH DE FR GB LI**

(71) Anmelder: **BAYER AG**
**D-51368 Leverkusen (DE)**

(72) Erfinder: **Roschger, Peter, Dr.**
**Adamstrasse 24**
**D-51063 Köln (DE)**
Erfinder: **Michaelis, Stephan, Dr.**
**Paul-Klee-Strasse 15c**
**D-51375 Leverkusen (DE)**
Erfinder: **Franke, Günther, Dr.**
**596 Planters Rest.**
**Mound Pleasant, S.C. 29464 (DE)**
Erfinder: **Woost, Bernd, Dr.**
**Jägerstrasse 30g**
**D-51603 Rösrath (DE)**
Erfinder: **Kaletta, Bernd, Dr.**
**Virneburgstrasse 71**
**D-40764 Langenfeld (DE)**

(54) **Neue Pigmentsalze und deren Verwendung zum Färben und Pigmentieren.**

(57) Verbesserte Pigmentsalze weisen ein Anion auf, das in einer tautomeren Form folgender Struktur entspricht:

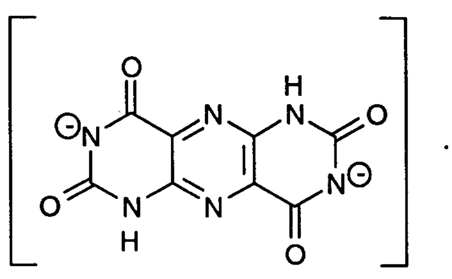

EP 0 682 087 A1

Die Erfindung betrifft ein verbessertes Verfahren zum Färben und Pigmentieren von Lacken und Kunststoffen mit Pigmentsalzen sowie neue Pigmentsalze.

Es ist bereits bekannt, organische Pigmente zum Färben von Kunststoffen und in Lacken zu verwenden. Der vorliegenden Erfindung lag die Aufgabe zugrunde, hinsichtlich der anwendungstechnischen und synthetischen Eigenschaften verbesserte Pigmente und Anwendungsverfahren zur Verfügung zu stellen.

Die vorliegende Erfindung betrifft ein Verfahren zum Färben und Pigmentieren von Lacken und Kunststoffen mit Pigmentsalzen, deren Anion in einer tautomeren Form folgender Struktur entspricht:

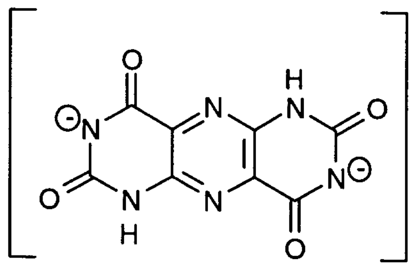

(I).

Als Kationen sind die bei Pigmenten üblichen Metallkationen verwendbar, wobei ein Teil der Ladung des Anions auch durch Wasserstoffatome H ausgeglichen sein kann. In einer bevorzugten Ausführungsform werden als Kationen Metallatome Z und Wasserstoffatome H verwendet, insbesondere $\frac{2m}{n}$ Z Atome und 2(1-m)H-Atome, worin bedeuten

Z n-wertiges Metallatom,

n 1 bis 3,

m 0,7 bis 1,0.

In einer besonderen Ausführungsform bedeutet

Z ein Alkalimetallkation (n = 1) wie $Li^{\oplus}$, $Na^{\oplus}$, $K^{\oplus}$, $Cs^{\oplus}$, $Rb^{\oplus}$, ein Erdalkalimetallkation (n = 2) wie $Mg^{2\oplus}$, $Ca^{2\oplus}$, $Sr^{2\oplus}$, $Ba^{2\oplus}$, sowie die Kationen $Al^{3\oplus}$, $Pb^{2\oplus}$, $Sn^{2\oplus}$, $Zn^{2\oplus}$, $Ni^{2\oplus}$, $Co^{2\oplus}$, $Co^{3\oplus}$, $Mn^{2\oplus}$, $Mn^{3\oplus}$, $Fe^{2\oplus}$, $Fe^{3\oplus}$, $Cr^{3\oplus}$, $Ti^{3\oplus}$, $Cu^{\oplus}$, $Cu^{2\oplus}$, $Cd^{2\oplus}$.

In einer besonders bevorzugten Ausführungsform steht

Z für $Cu^{\oplus}$, $Na^{\oplus}$, $K^{\oplus}$, $Mg^{2\oplus}$, $Ca^{2\oplus}$, $Sr^{2\oplus}$, $Al^{3\oplus}$, $Mn^{2\oplus}$.

Die Darstellung der Verbindung der Formel (I) als Kaliumsalz (Z = $K^{\oplus}$) ist in J. Med. Chem. 9, S. 610-612 (1966) beschrieben. Kalium-, Silber- und Natriumsalze sind erwähnt in J. Biol. Chem 71, S. 497-499 (1927). Salze mit anderen Kationen sowie deren Verwendung als Farbmittel sind nicht beschrieben.

Daher sind weiterer Gegenstand der Erfindung neue Pigmentsalze der Formel (I), in welcher Z die obengenannte Bedeutung besitzt, mit Ausnahme von Z gleich $K^{\oplus}$, $Ag^{\oplus}$, $Na^{\oplus}$.

Die Darstellung der Salze kann aus der freien Substanz der Formel (I) mit Z = $H^{\oplus}$ erfolgen, indem man Lösungen dieser in geeigneten Lösungsmitteln, vorzugsweise Wasser, mit Salzen der Metalle Z umsetzt und die Fällung isoliert.

Geeignete Salze der Metalle Z sind z.B. jene mit den Anionen Fluorid, Chlorid, Bromid, Iodid, Sulfat, Nitrat, Acetat, Phosphat, Oxid, Hydroxid, Carbonat, Hydrogencarbonat.

Eine weitere Darstellungsmöglichkeit besteht darin, Salze der Formel (I) durch Umsalzen zu gewinnen, indem man Lösungen oder Suspensionen eines bestimmten Salzes der Formel (I), z.B. in heißem Wasser, mit einem Überschuß von einem Metallsalz, in welchem das Kation ein anderes ist als im Salz der Formel (I), versetzt und so einen Austausch des Kations in Salzen der Formel (I) erzielt.

Eine weitere Darstellungsmethode ist der Zusatz von gewünschten Metallionen (Z) im Zuge des Aufbaus des Grundkörpers (d.h. des Anions in den Pigmentsalzen der Formel (I)).

Der Aufbau dieses Grundkörpers kann z.B., wie in J. Med. Chem 9, S. 610-612 (1966) oder J. Biol. Chem 71, S. 497 (1927) beschrieben, durch oxidative Dimerisierung von 5-Aminouracil nach

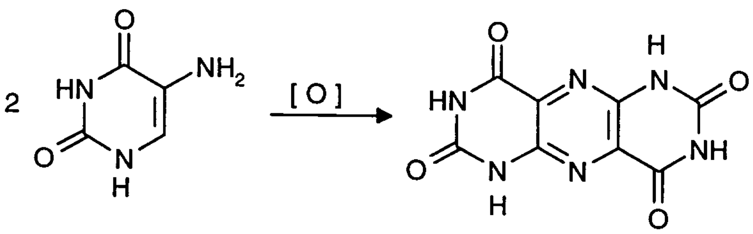


erfolgen. In der genannten Literaturstelle wird als Oxidationsmittel Kaliumhexacyanoferrat (III) verwendet.

Weitere in Frage kommende Oxidationsmittel sind z.B. Luft, Sauerstoff, Wasserstoffperoxid, Hypochlorit, Persulfate, Percarbonate, Peressigsäure, Perameisensäure u.a., wobei Katalysatoren zugesetzt werden können.

Eine weitere Darstellungsmethode ist in J. Am. Chem. Soc. 77, S. 2243-2298 (1955) beschrieben.

Die Darstellung des Grundkörpers kann aber auch durch Dimerisierung von 6-Azidouracil, 6-Hydroxylaminouracil, 5,6-Diaminouracil, 6-Amino-5-nitrosouracil, 5-Nitro-, 5-Nitroso- oder 5-Aminobarbitursäure oder Entaminierung (z.B. mit salpetriger Säure) von 2,4,6,8-Tetraamino-1,3,5,7,9,10-hexa-aza-anthracen erfolgen.

Weitere Synthesemöglichkeiten sind die Kondensationen nach dem Schema:

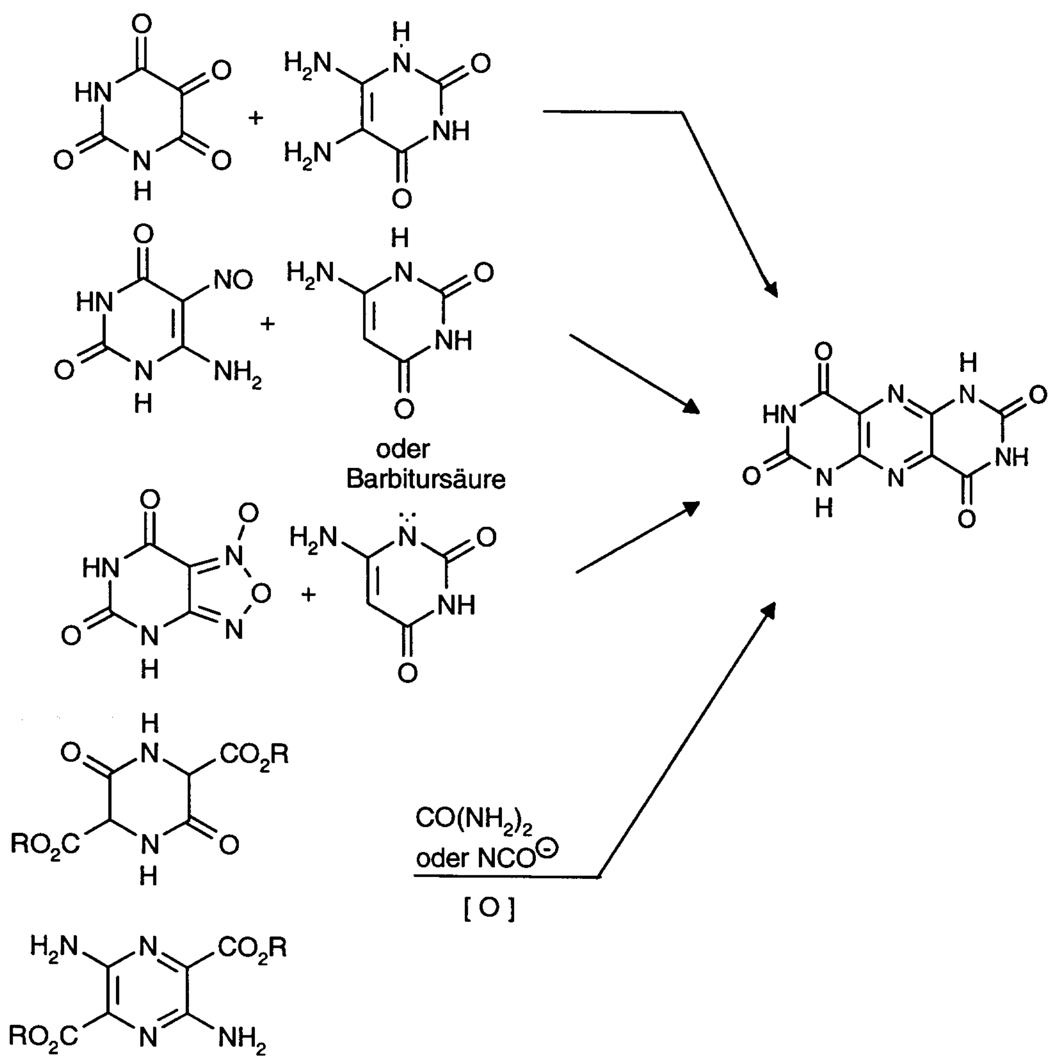


Verbindungen der Formel (I) können insbesondere als Pigmente, insbesondere zum Pigmentieren von hochmolekularem organischem Material, verwendet werden.

Die Verbindungen der Formel (I) fallen in einer für die Pigmentanwendung geeigneten Form an oder können durch an sich bekannte Nachbehandlungsverfahren in die geeignete Form überführt werden. Die Feinverteilung kann durch Mahlen mit oder ohne Mahlhilfsstoffe wie anorganischen Salzen oder Sand, gegebenenfalls in Anwesenheit von Lösungsmitteln wie Toluol, Xylol, Dichlorbenzol oder N-Methylpyrrolidon erzielt werden. Farbstärke und Transparenz des Pigments können durch Variation der Nachbehandlung beeinflußt werden.

Hochmolekulare organische Materialien, die mit den Verbindungen der Formel (I) gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Phenoplaste, Polycarbonate, Polyolefine, Polyvinylchlorid, Polyethylen, Polypropylen, Polyvinylpropionat, Polyamide, Superpolyamide, Polymerisate, Polyvinylacetat und Mischpolymerisate aus Acrylestern, Methacrylestern, Acrylnitril, Acrylamid, Butadien, Styrol sowie Polyurethane oder Polyester, Gummi, Casein, Silicon und Siliconharze, einzeln oder in Mischungen mit anderen organischen oder anorganischen Farbstoffen und Pigmenten, z.B. mit anorganischen Weißpigmenten wie Titandioxid (Rutil).

Dabei spielt es keine Rolle, ob die erwähnten hochmolekularen organischen Verbindungen als plastische Massen, Schmelzen oder in Form von Spinnlösungen, in Zubereitungen, z.B. Flushpasten mit organischen Flüssigkeiten, in Anstrichmittel, z.B. physikalisch oder oxidativ trocknende Lacke, Einbrennlacke, Reaktionslacke, in Zweikomponentenlacke, Dispersionsfarben für wetterfeste Überzüge und Leimfarben, oder in Druckfarben, z.B. für den Papier-, Textil- und Blechdruck vorliegen.

Je nach Verwendungszweck erweist es sich als vorteilhaft, die erfindungsgemäß zu verwendenden Pigmente als Toner oder in Form von Präparaten einzusetzen. Bezogen auf das zu pigmentierende hochmolekulare organische Material setzt man die Verbindungen der Formel (I) in einer Menge von vorzugsweise 0,1 bis 10 Gew.-% ein.

Die erhaltenen Färbungen, beispielsweise in Kunststoffen, Fasern, Lacken oder Drucken, zeichnen sich durch Farbstärke, gute Dispergierbarkeit, gute Überlackier-, Migrations-, Hitze-, Licht- und Wetterechtheit, sowie durch einen guten Glanz aus.

Die vorliegende Erfindung soll anhand der folgenden Beispiele erläutert werden, ohne sie jedoch einzuschränken.

**Beispiel 1**

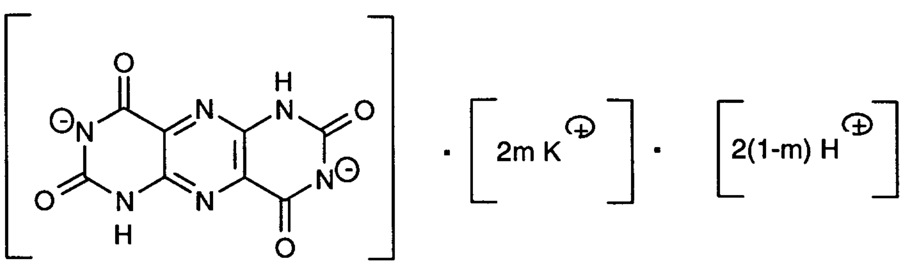

Die Darstellung als Kaliumsalz erfolgte analog zu J. Med. Chem. 9, S. 611 (1966), der Kaliumgehalt beträgt 19,0-20,1 % (m = 0,75-0,81). Das getrocknete Pigment wurde gemahlen und für Ausfärbungen eingesetzt.

**Beispiel 2**

Transparente Einfärbung in PVC-P:

0,1 Teil des Pigments aus Beispiel 1 wird mit 100 Teilen PVC-Compound in einer langsam laufenden Labormischvorrichtung vermischt, auf das laufende Labor-Mischwalzwerk gegeben, homogenisiert und als Fell abgezogen.

Man erhält orange transparente Färbungen mit ausgezeichneter Licht-, Wetter- und Migrationsechtheit.

**Beispiel 3**

Gedeckte Einfärbung in PVC-P:

0,2 Teile des Pigments aus Beispiel 1 werden zusammen mit 10 Teilen Titandioxid (Rutiltyp) mit 100 Teilen PVC-Compound vermischt und bei 160 °C homogenisiert. Das vom Laborwalzwerk abgezogene Fell hat eine deckende, orange Farbnuance. Die Färbungen zeigen eine sehr gute Migrations-, Licht- und Wetterechtheit.

**Beispiel 4**

Transluzente und deckende Färbungen in HD-Polyethylen und Polypropylen:

100 Teile eines handelsüblichen Polyethylen-Granulates werden mit 0,2 Teilen Pigment aus Beispiel 1 in einer langsam laufenden Mischtrommel gemischt. Das erhaltene Granulat wird über einen Extruder bei 170 °C homogenisiert und zu flachen Bändern abgezogen, erneut granuliert und auf einer Schneckenspritzgießmaschine bei Temperaturen oberhalb 200 °C verspritzt. Bei Erhöhung der Spritztemperatur von 200 °C auf 320 °C läßt sich keine Veränderung der Farbnuance feststellen.

Gleiche Ergebnisse werden in deckenden Einfärbungen mit Titandioxid (Rutiltyp) in HD-PE und in kristallinem Polypropylen ebenfalls als transparente und deckende Pigmentierungen erreicht.

**Beispiel 5**

Einfärbung von Polystyrol (PS) und mit Butadien modifiziertem Polystyrol (SB):

0,1 Teil Pigment aus Beispiel 1 werden mit 0,5 Teilen Titandioxid (Rutiltyp) und 100 Teilen PS-Granulat (SB-Granulat) gemischt und auf einer Schneckenspritzgießmaschine bei erhöhtem Staudruck verspritzt. Man erhält Formteile mit einer orangen Nuance und gleichmäßiger Pigmentverteilung.

**Beispiel 6**

Einfärbung von ABS:

0,5 Teile Pigment aus Beispiel 1 werden mit 4 Teilen Titandioxid (Rutiltyp) und 100 Teilen ABS-Pulver vermischt, im Stempelkneter bei 180 °C plastifiziert, homogenisiert, über ein Walzwerk ausgetragen, nach den üblichen Methoden granuliert und auf einer Schneckenspritzgießmaschine zu Formteilen mit einem orangen Farbton gespritzt. Bei Verarbeitungstemperaturen von 220 °C bis 280 °C und langen Verweilzeiten sind keine Farbtonänderungen feststellbar.

Gleich gute Ergebnisse werden in Kunststoffblends der Zusammensetzung ABS/Polycarbonat erreicht.

**Beispiel 7**

Einfärbung von Polycarbonat (PC) und Polycarbonat/Polybutylenterephthalat (PC/PBT):

0,2 Teile Pigment aus Beispiel 1 werden mit einem handelsüblichen Polycarbonat trocken gemischt, auf einem Zweiwellenextruder 290 °C geschmolzen und dabei das Pigment dispergiert. Das homogen angefärbte PC wird erneut granuliert und das Granulat nach den üblichen Methoden des Spritzgießverfahrens bei Temperaturen bis zu 340 °C verarbeitet. Farbtonänderungen der orange gefärbten Formteile sind bei verschiedenen Temperaturen nicht zu beobachten.

Auch in PC/PBT ist bei Verarbeitungstemperaturen von 250 °C bis 290 °C das Pigment ohne Änderung der Nuance hitzebeständig.

**Beispiel 8**

4 g feingemahlenes Pigment gemäß Beispiel 1 werden in 92 g eines Einbrennlackes folgender Zusammensetzung dispergiert:

33 % Alkydharz
15 % Melaminharz

5 % Glykolmonomethylether
34% Xylol
13 % Butanol

Als Alkydharze kommen Produkte auf Basis synthetischer und pflanzlicher Fettsäuren wie Kokosöl, Rizinusöl, Rizinenöl, Leinöl u.a. in Frage. Anstelle von Melaminharzen können Harnstoffharze verwendet werden. Nach erfolgter Dispergierung wird der pigmentierte Lack auf Papier-, Glas-, Kunststoff- oder Metall-Folien aufgetragen und 30 Minuten bei 130 °C eingebrannt. Die Lackierungen besitzen sehr gute Licht- und Wetterbeständigkeit sowie gute Überlackierechtheit.

Dieser Einbrennlack wird auf weißes Papier aufgestrichen, bei 130 °C eingebrannt und zeigt einen orangen Farbton mit ausgezeichnetem Echtheitsniveau. Ebenfalls gute Ergebnisse werden mit Wasserlacksystemen erzielt.

**Beispiel 9**

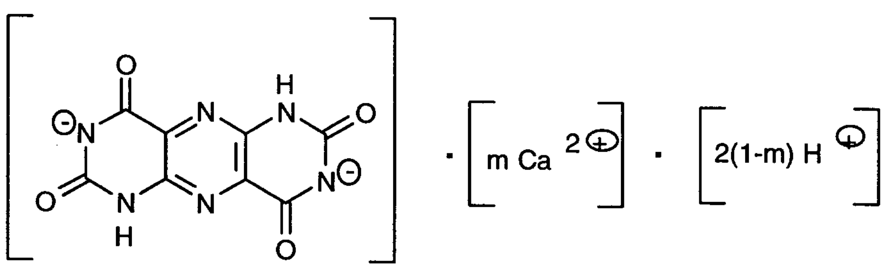

1,24 g des Pigments aus Beispiel 1 (Kaliumsalz) werden in 100 ml heißem Wasser suspendiert und dann mit einer Lösung von 1,2 g Kalziumnitrattetrahydrat in wenig Wasser versetzt. Bei ca. 80 °C stellt man mit KOH (30 %ige Lösung in Wasser) alkalisch und saugt das gebildete Kalziumsalz ab. Es wird mit Wasser und Methanol gewaschen und getrocknet.
Ausbeute: 1,1 g, Kalziumgehalt 10,9 % (entsprechend einem Wert für m = 0,76). Der Kaliumgehalt liegt bei 0,06 %.

Analog zu den Beispielen 2 bis 8 ausgefärbt, erhält man hochechte rote Färbungen in Kunststoffen und Lacken.

**Patentansprüche**

**1.** Verwendung von Pigmentsalzen zum Färben und Pigmentieren, wobei das Anion des Pigmentsalzes in einer tautomeren Form folgender Struktur entspricht:

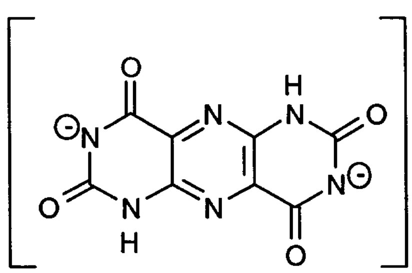

(I).

**2.** Verfahren nach Anspruch 1, dadurch gekennzeichnet, daß das Kation des Pigmentsalzes im wesentlichen ein Metallatom Z ist.

**3.** Verfahren nach Anspruch 1, dadurch gekennzeichnet, daß als Kation des Pigmentsalzes $\frac{2m}{n}$ n-wertige Metallatome Z und 2(1-m) Wasserstoffatome vorliegen, worin bedeuten

Z Metallatome,
n 1 bis 3,

m 0,7 bis 1,0.

**4.** Verfahren nach Anspruch 1, dadurch gekennzeichnet, daß als Metallkationen des Pigmentsalzes ein- bis dreiwertige Metallkationen verwendet werden.

**5.** Verfahren nach Anspruch 1, dadurch gekennzeichnet, daß als Metallkationen $Cu^{\oplus}$, $Na^{\oplus}$, $K^{\oplus}$, $Mg^{2\oplus}$, $Ca^{2\oplus}$, $Sr^{2\oplus}$, $Al^{3\oplus}$, $Mn^{2\oplus}$ verwendet werden, wobei ein Teil der Kationen Wasserstoffatome sein können.

**6.** Verfahren nach Anspruch 1, dadurch gekennzeichnet, daß Lacke oder Kunststoffe gefärbt und/oder pigmentiert werden.

**7.** Ionische Verbindungen, deren Anion in einer tautomeren Form folgender Struktur entspricht:

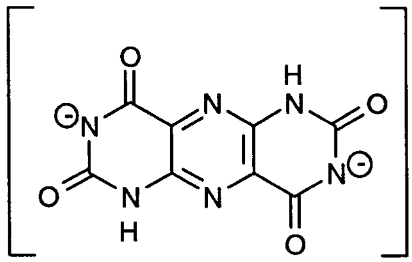,

wobei als Kation Metallatome und/oder Wasserstoffatome vorliegen, ausgenommen derartige Verbindungen, bei denen die Kationen K, Ag und/oder Na-Kationen sind.

Europäisches Patentamt

# EUROPÄISCHER RECHERCHENBERICHT

Nummer der Anmeldung
EP 95 10 6004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,Y | JOURNAL OF BIOLOGICAL CHEMISTRY, Bd. 71, 1927 MD US, Seiten 497-499, O.BAUDISCH ET AL 'the oxidation of 5-aminouracil' * das ganze Dokument * | 1-7 | C09B17/00<br>C09B57/10<br>C07D487/14<br>C09D7/12<br>C08K5/3462<br>//(C07D487/14, 241:00,239:00, 239:00) |
| Y | CHEMICAL ABSTRACTS, vol. 119, no. 2, 12.Juli 1993 Columbus, Ohio, US; abstract no. 10444n, SCHMIDT ET AL 'metal complexes of dyes' Seite 93; * Zusammenfassung * & Z. NATURFORSCH. B:CHEM. SCI., Bd. 48, Nr. 2, 1993 Seiten 189-194, | 1-7 | |
| D,Y | JOURNAL OF MEDICINAL CHEMISTRY, Bd. 9, 1966 WASHINGTON US, Seiten 610-612, KAMINSKY ET AL 'Some congeners and analogs of dipyridamole' * Seite 611, rechte Spalte, letzter Absatz * | 1-7 | **RECHERCHIERTE SACHGEBIETE (Int.Cl.6)**<br>C09B<br>C07D |
| Y | US-A-3 843 653 (ALDRIDGE G) 22.Oktober 1974 * das ganze Dokument * | 1-7 | |
| A | GB-A-599 490 (J.L SWITZER ET AL) 8.April 1948 * Seite 1, Zeile 83 - Zeile 94 * | 1-7 | |
| A | GB-A-1 294 322 (ICI) 25.Oktober 1972 * Seite 1, Zeile 13 - Zeile 65 * | 1-7 | |

-/--

Der vorliegende Recherchenbericht wurde für alle Patentansprüche erstellt

| Recherchenort | Abschlußdatum der Recherche | Prüfer |
|---|---|---|
| DEN HAAG | 21.August 1995 | Dauksch, H |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 95 10 6004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | JOURNAL OF THE AMERICAN CHEMICAL SOCIETY, Bd. 77, 1955 DC US, Seiten 2243-2248, E.C. TAYLOR ET AL 'pyrimidopteridines by oxidative self-condensation of aminopyrimidines' * Seite 2244; Beispiel 12 * ----- | 1-7 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 21.August 1995 | Dauksch, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)